# EUROPEAN PATENT APPLICATION

(11) **EP 4 417 713 A1**
(43) Date of publication of application: **21.08.2024**
(21) Application number: 23156425.3
(22) Date of filing: 14.02.2023
(51) Int. Cl.: C21C 5/54, C21C 5/56, C21B 13/00, C21B 13/12, C21B 13/14, C21B 3/06

(54) **THE NOVEL TWO-STEP (SEMI-)CONTINUOUS PROCESS FOR CLEAN SLAG AND STEEL OR HOT METAL**

(71) Applicant: Oterdoom, Harmen, 1951 MN Velsen-Noord, Noord Holland (NL); Butter Bridge BV, 1951 MN Velsen Noord, Noord Holland (NL)
(72) Inventor: Oterdoom, Harmen, 1951 MN Velsen-Noord, Noord Holland (NL)

(57) **Abstract**

A method for the continuous production of steel, semi steel, or hot metal in a multi-stage continuous electric furnace configuration where tapped alloy from the primary electric furnace could be processed further with or without use of a secondary step for removal of carbon and silicon, for example a basic oxygen converter, and where this primary electric furnace is connected in some way to a secondary electric furnace in which the slag from said primary electric furnace is processed to ensure maximal iron recovery as well as maximal potential use for the slag, its' components, and its' energy content, even including the processing of internal and external material streams.

## Description

### Background of the description

The novel two-step (semi-)continuous process for clean slag and steel or hot metal

### On electric furnaces

### Technology

The explanation of the novelty of the method in comparison to existing production routes that use electric furnace is slightly elaborate yet will demonstrate the significant differences. Electric furnaces in this patent will cover those furnaces that use electrodes and electricity to (s)melt material in a vessel.

Though multiple categorisations, definitions, and descriptions of electric furnaces exist, this application will be based on the descriptions as outlined below. The use of different definitions in other applications for the same objects should not distract from the originality of this application.

### Electric Arc Furnaces (EAFs)

Many furnaces use electric arcs, and therefore the description of an EAF can be interpreted by many people in different ways. In this patent the EAF is used for the electricity powered furnace as is common in the steel industry. An EAF is a furnace that operates batchwise and is switched off and (nearly) completely drained between batches, also known as heats. Often an EAF uses a foam layer. Duration of a batch nowadays can be as short as 40 minutes, though some batch (s)melting operations, especially applied to other commodities can be hours.

### Continuous Electric Furnaces (CEF)

The description continuous electric furnace (CEF) covers a wide range of operations and furnace designs, in which the main feature is that the operation is not switched off in short intervals, and the furnace is not drained unless with big events like emergencies or relining. The emptying of a furnace typically happens with a frequency in the range of years, and less normal in the range of months or decades.

The wide range of furnaces that are covered by "CEFs" is demonstrated below, where it should be noted even more configurations are possible and have been installed. CEFS are in operation that are:
- round, rectangular, oval or even circular triangle in shape,
- made with or without a shell,
- made with a shell without refractory, consisting solely of a metallic sidewall like copper or steel,
- made with a shell lined with refractory, made for example from oxide materials based on MgO, Cr2O3, Al2O3, SiO2, ZrO2, and also from carbonaceous or nitrided materials,
- made without or with cooling installed in some way integrated in the shell, the lining, or both,
- charged continuously and in batches,
- tapped continuously and in batches,
- usually not using a foam layer, but sometimes do,
- Can operate ideally with a very constant load or be designed to have some variation depending on the operation of the plant and the raw materials, yet not in a way that the furnace is switched off after anything that could be called a batch. Examples are:
   ∘ In some operations the load can fluctuate around a high load, for example 90MW, yet the set point ideally remains 90 MW continuously for days or longer.
   ∘ In some operations the batchwise charging of certain materials or lack thereof will require an operationally normal adjustment or periodical fluctuation of the load, but not the switching-off of the furnace.

To complicate terminology more, even continuously operated EAFs are mentioned in literature, for example where a batch DRI processing EAF has been developed into an electric furnace where the power is not switched off between tappings (Schulze, 2012). Other words found in literature are "melter", "smelter", "slagger" to name but a few.

This novel patent does not involve the development of new equipment. An enormous number of developments in equipment have taken place for more than 100 years, which makes the development of something truly innovative a challenging task and easily a contestable claim. The descriptions provided merely serve to explain what all has been done in the past and what equipment should be seen as a CEF as used in the rest of this application.

In this paper the CEF will be used to describe any type of electric furnace where energy transfer is via electrode(s) and that does switch off for example maintenance, inspection, or relining.

A CEF is not used to describe a furnace that is switched off every time between processing of anything resembling batches, nor is drained multiple times per day or week.

### Induction furnaces (IF)

These are furnaces that do not use electrodes to transfer energy to material, but induction. This type of furnace is not part of this patent. It is acknowledged that the slag from an IF, which is tapped in batches or continuously, can be processed in a secondary furnace both in a batch mode or continuously. As a method this does not seem novel, for which reason a claim is not laid on the processing of slags from induction furnaces, yet publication of this acknowledgment may render claiming a patent on processing of IF slag hard.

### Other electric furnaces

Other variants of furnaces or operations may exist. However, the patent is about the specific case of continuous steel, semi-steel and hot metal production in a primary CEF in combination with slag treatment in a secondary CEF.

### Electrical configuration

Electrical furnaces are typically defined by their electrical configuration. With electric configuration the following, but not limited to, is meant:
- Powered by alternating current (AC) or direct current (DC)
- Be equipped with varying number of electrodes, for example 1, 2, 3, or 6 electrodes,
- Be equipped with graphite, carbon, graphitised, prebaked, Soederberg electrodes, composite electrodes, or even other types of electrodes

Both EAFs and CEFs can be designed for AC or DC operation. The industry tends to associate AC or DC operation with a certain product. Technically however, such a distinction is not clearly defined, nor defendable, nor useful.

The number and type electrodes are also sometimes used to define EAFs and CEFs. The choice to apply any configuration of number and type of electrode is mostly dependent on other factors like but not limited to electro-mechanical ones, the energy balance, electrode consumption, operability, cost, and allowable contamination of the product by electrode consumption, but not on the product.

### Operation

CEF operation can be defined by the position of the electrode tip relative to the burden.

An example of a CEF is a submerged arc furnace (SAF). Though originally, and for some still, an SAF has the electrode tips buried in a burden, the term "SAF" has also been applied to furnaces that have the electrodes dipped in, hovering at, or hanging above an open or covered slag bath, or can have the electrode tips covered just or massively by feed material or even a foaming slag.

### Products

### Ferro alloys

CEFs are applied in the production of for example but not limited to FeCr, FeNi, FeSi or FeNb. The input materials are typically untreated, dried, or calcined ore in combination with reductant, fluxes, both reductant and fluxes, or even neither flux or reductant.

### Pig-iron

CEFs have been used since the early 1900s to primarily produce pig iron, containing C up to 4% or even more. This is documented in for example [Lyon, 1907], where pig iron is produced with high C contents in the tapped metal and low FeO content in the slag. The method of using electric furnaces for hot metal (Fe) production has largely been discarded as the blast furnace proved to be the more economical production unit.

### Steel

Steel as well has been made in CEFs in the past. The reference [Keeney, 1914] shows that steel can be produced in a continuous furnace as well, with low carbon contents in steel and with high iron losses to the slag.

The use of CEFs with the primary purpose of steel production with a carbon content <2,0°/ (Steel Association, 2018) including its associated advantages like continuity, reduced heat losses, grid stabilization, tolerance to gangue variability, possibility to stabilise the composition of variability in feed material, has been published and documented on multiple occasions over multiple decades.

Examples are Donaldson et al., 1962; Barati, 2009; Oterdoom, 2018 and even dating back to the beginning of the 20^{th} century [Stansfield, 1914; Pring, 1921a; Pring 1921b].

CEF concepts designed for production of steel include CRISP by Hatch (WO/03/097882) from 2003, US3472649 by Sibakin in 1969, US4113468 by Demag from 1978, the S/EAF by SMS Group (Germershausen et al, 2013), or SIMETAL EAF FAST-DRI by Siemens VAI (Siemens, 2011; Schulze, 2012).

However, none of these patents deals with the issue of high iron losses to the slag, recovery of the iron and other elements from the slag, nor the optimal use of the produced slag in a secondary CEF.

### Slags

CEFs have also been used in related processes like the smelting of vanadium titano magnetite or ilmenite ores as performed at Highveld, QIT, New Zealand Steel, or in Norway at Thyssedal. The primary product may have been titania slag and / or a pig iron with or without vanadium. Typically, the carbon content in tapped metal ranged from 1 to 4,5 % while the FeO in the slag ranged from 0,5 to 15 %.

Cu slag treatment is done for enhanced copper recovery and removal of detrimental elements and it has been proposed to upgrade the slag to better products than aggregate (König et al, 2013)

SMS group has a patent that applies intensive cleaning of a copper slag in a ladle before the mix is then charged into a continuous electric furnace more specific a so-called settling furnace, patent DE102016214207A1.

CEFs are also used for the production of calcium carbide.

### Upcoming use

### Pre-reduced iron ore (DRI and the like)

It can be foreseen that DC furnaces may be used in the future for processing pretreated material, or that a DC furnace may even be used for processing ore directly to produce steel, semi-steel, or hot metal. For example, The Susteel project [KiMET, 2021] aims to use hydrogen as reductant in a DC furnace for steel production from ore, though pre-reduced material could be used as well. As such a production of steel would be in a continuous manner, the DC furnace used in such a case should be seen as a primary CEF and is considered part of the method claimed.

### On current technology and production routes for steel

Most steel is produced by the blast furnace - converter route (BF-BOF), and second is the electric arc furnace (EAF) route. In 2018, total production was 1,809 MT, of which 72% is made via the Blast Furnace - Basic Oxygen Furnace (BF-BOF) route, and 28% is made via the EAF route (Steel Association, 2018).

### The blast furnace (BF) in steel production

The blast furnace route produces hot metal with a high carbon content, operates continuously and is tapped at regular intervals. The FeO content in the tapped slag is low, usually below 2%. This means that there is a high recovery of Fe into the tapped hot metal, and secondly the Fe content in the slag is so low that the slag can be used for example in cement making. Such slag is well known to be used a lot in Portland cement.

It has also been reported that slag from the blast furnace is used directly or with the addition of other materials in the production of insulation wool in a connected electrical furnace (Kotze, 2021).

Because of the unavoidable high C content of up to over 4 % and a possibly too high Si content of the hot metal from the blast furnace, the second step in production of steel is the blow out the excess C and Si as well as other elements. The converter is therefore an indispensable tool in the production of steel via the blast furnace route.

Next, the steel that is tapped from the converter typically is treated in one or more ladle treatment stages and then ready for casting.

It is clear that the novel method distinguishes itself in that it consists of two electrical furnaces in series, and not a blast furnace in combination with an electric furnace.

Secondly, the slag from a BF is so low in FeO that an operation to recover Fe from this slag by reduction of remaining iron oxides is not done nor required.

As there is anyway no claim towards having developed a novel method for treating slag from a BF in an electrical furnace, no patents are cited. This paragraph merely serves to supply some background information.

### The electric arc furnace (EAF) in steel production

The electric arc furnace (EAF) route, in use for over 100 years, uses electricity to melt scrap and/or smelt pre-reduced iron ore. The modern EAF typically works with a foaming slag based on carbon and/or gas injection. The EAF is operated in batch mode and is therefore highly cyclical in operation meaning that it switches off multiple times per day. Continuously operating EAFs have been covered in the previous section: definitions and terminology are not globally unified.

It is important to point out that the novel two-step process route is very different to the batch wise electric arc furnace steel producing route. The EAF typically processes scrap with or without other iron containing materials in the form of but not limited to DRI or HBI. The EAF operates highly cyclical in which there are times when it is switched off, so material can be charged or tapped, and times when the furnace is in operation. As a result, the furnace load - measured in MW - fluctuates strongly with accompanying issues for the electrical supply grid. Secondly, the furnace has significant heat losses in the time it is not operated.

The EAF operation can not be compared to the operation of a furnace that continuously processes material, from here on called a continuous electric furnace (CEF).

Regarding the EAF, the newly proposed method does not operate the primary (s)melting furnace in a batch mode but continuously, which is a significant difference to the existing practice in EAFs. Each batch both slag and steel must be removed from an EAF, whereas in the proposed novel method both slag and steel or hot metal can be tapped independently at any desired time.

It is acknowledged that the slag from an EAF, which is tapped in batches, can be processed in a secondary continuous electric furnace that operates both in a batch mode or continuously. This has been proposed by others, but always in combination with a batchwise operated primary electric furnace and not, as in the current proposal, using a continuous electric furnace..

As a method, the processing of EAF slag alone in any form does not seem novel, for which reason a claim is not laid though future claims to such a claim being novel are now avoided.

Further advantages of using a CEF to process DRI instead of an EAF include:
- The carbon injection with the sole purpose of maintaining a foam layer in an EAF is something that can be avoided by using a CEF, because a CEF can be operated without a foaming slag.
- Especially in the case of DRI produced with hydrogen only, there will be no carbon present in the DRI to support any foaming in the EAF processing step. To make foam in an EAF without carbon in the DRI may then require additional carbon injection for gas production, but that would be unnecessary when using a CEF.

### Patents on steel and steel production using

Multiple patents cover the recovery of iron from converter slags. However, the current novel method is not concerning the treatment of converter slag, but the treatment of a slag from a primary electrical furnace in which steel, semi-steel, or hot metal is directly produced. To give some examples of patents based on converter slag.

United States Patent 4,490,168 includes two electric furnaces for the production of steel and hot metal, but is not concerned with the treatment of the slag. Hot metal from one furnace is treated in the second electric furnace to make steel.

Patents like US4514218A, US3472650, DE000003334221A1, GB993040A, and US4564388A are patents about making steel continuously in an electric furnace without a second furnace focused on slag treatment and iron recovery, or using the energy contained in the slag usefully for processing waste materials.

DE000001800131B is a complex single construction with multiple zones. This does not allow a separation of processes, for example by switching off of one furnace. Nor is the recovery of iron units and possibly other elements done with electric power, but with fuel fired lances. This idea therefore does not compete with the novel invention where two physically separated electric furnaces in series are applied.

EP 1 144 696 B1 mentions "series of furnaces", but is referring to a rotary hearth furnace in combination with a single electric furnace, not two electric furnaces in series. The single electric furnace but is focused on tapping alloy with > 1% of carbon ore more and is not including a second furnace for the treatment of slag that results from producing an alloy with < 0,5% of carbon in the primary furnace.

One example is The Japanese patent JP2006528732A **which** describes the recovery of iron from steel a slag with elevated iron contents. However, this patent applies to slag coming from a converter or a steel finetuning furnace like an Argon Oxygen Decarburization (AOD) or Ladle Furnace (LF), and not as claimed in the novel patent, primarily for treatment of, possibly iron-rich, slag coming from a continuous electric furnace that produces steel or hot metal directly from iron containing feed material like DRI or other iron containing materials, pretreated or not.

The Japanese patent EP2767597A1 describes very well the numerous options that electrical processing of an iron containing slag offers, including processing of waste streams, which also supports the possible features that are described later but are not claimed for the novelty of the claimed method. This patent is however concerned with slag from a converter, and not concerned with treatment of slag coming from a CEF. Similar can be aid for the patent WO2004101828A1.

The patents DE102017119675A1 is concerned with treatment of steel converter slag. This patent however oxidises the slag to make recovery of iron units possible and does not foresee to use a CEF., contrary to the newly proposed method.

It is clear that the focus in existing patents is on treatment of converter slag, and not on the treatment of slag from a CEF.

### Summary of the description of the existing field

The new method does not claim:
- production of steel in an electric furnace, be it continuous or in batches, as these methods have been extensively described in open access literature and patents,
- cleaning alone of a slag in an electrical furnace, as this has been applied for many decades
- having developed a specific new piece of equipment to process iron containing material for steel, waste streams containing valuable, dangerous, toxic, or critical elements, because such equipment does exist as well for over 100 years.
- the production alone of steel in a DC furnace, as this has been done in the past and/or is under development already.

### The problem

Currently there is no method described or patented to deal with the problem in the steel industry caused by the combination of hydrogen based DRI, poorer iron ore qualities, DRI that will contain more gangue and less to no carbon, increasing demand for lower carbon emissions, increased requirement for circularity of raw materials, maximised energy usage, and minimised slag dumping while maximising slag valorisation.

These should all be seen in combination with the problem that a lot of recovery of (critical) raw materials is uneconomical due to energy cost, material complexity, small volumes, and the question what to do with the waste after extraction of the (critical) raw materials. This includes for example but is not limited to raw material streams that are generally considered waste, hazardous, toxic, or may be destined for landfill or low level (for example aggregate, foundation, road construction) material usage.

### The solution

The solution is an inventive reconfiguration of existing equipment. This equipment has been applied in production facilities for other metals and alloys, but to date not in any steel production facility especially in proposed configuration.

The high-volume low-value industry that steel is, prevented such application. Mentioned problems and challenges now open the door for such a new method.

### Detailed description

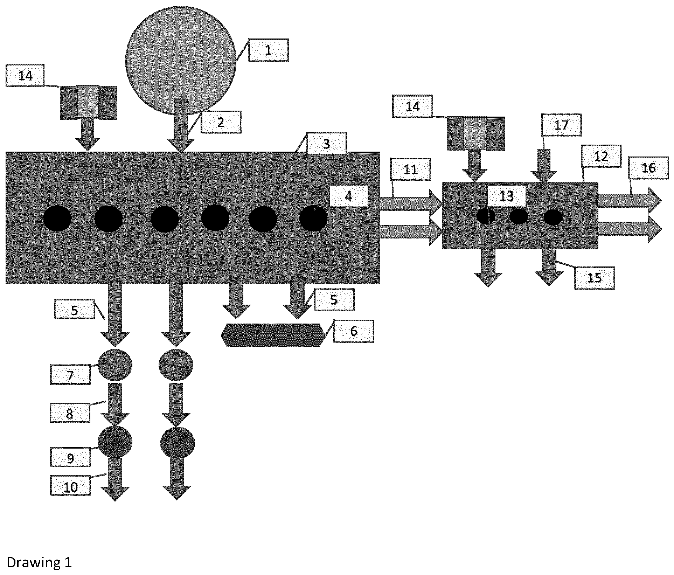

Drawing 1 shows the basic idea of the method. A prereduction unit (1), for example but not limited to a MIDREX, rotary hearth furnace (RHF) or a rotary kiln, supplies a feed preferentially highly pre-reduced but not necessarily via any transport system(2), for example nut not limited to chutes, transfer ladles, or screw conveyor, to the primary continuous electric furnace (3) powered by any number of electrodes (4), in the drawing 1 the number is 6. This primary CEF can be of any configuration as explained previously.

Different materials can be added from for example bins (14) to the primary furnace (3) and secondary continuous electric furnace (12), for example liquid or solid, acid or basic, waste, ore, metal. The primary CEF (3) operates continuously, and steel with < 1% C or even < 0,1% C or hot metal is tapped periodically or continuously through tapholes via launders (5).

The tapped material may be transported elsewhere in any type of means of transport (6), possibly by ladle or torpedo wagon, to a converter if required, or can be processed directly in a ladle treatment facility (7) consisting of one or multiple treatment steps. Once the product has reached the desired composition, it is transported (8) to the casting unit (9) and casted (10). Both transport and further treatment are standard technologies.

Slag is tapped intermittently or continuously from the primary electric furnace (3) and transported (11) preferably via a launder but possibly (also) by transfer with ladles to the secondary continuous electric furnace (12). The slag can contain from below 3% of FeO up to over 40% of FeO, especially in the case where hydrogen based DRI has been processed in the primary furnace.

The secondary CEF can be powered by any number of electrodes (13), in this case 3. This secondary CEF can be of any configuration as explained previously. In the secondary electric furnace solid materials can be added from bins (14). Liquid charging of the secondary CEF is also possible (17), coming possibly from internal processes or nearby located facilities to achieve desired targets.

The secondary electric furnace (12) is primarily installed to reduce the iron content in the slag and allow the slag to be used as portland cement, cement replacement, or a construction material. The reducing materials charged allow the reduction of FeO down to below 5% or even 3% or preferably below 1% for a white cement.

To improve the process, operation, productivity, circularity, or sustainability of the plant or region, any type of waste or material stream could be added to both primary and secondary furnace. Materials to consider range from for example but not limited to liquid ladle station slag to internal solid residues like mill scale, or even other waste streams from any other location or operation.

Periodically an alloy is tapped (15) from the secondary electric furnace, for which the use of the alloy will depend on the composition. Similarly, slag will be tapped periodically or continuously (16) and transported to the intended use or user. This use could be similar to that of granulated blast furnace slag.

A secondary aim of the two-stage process is that the final slag can be maximally cleaned of unwanted elements, while also desired elements may be maximally collected in either the slag, alloy, gas, or dust. On the other hand, it is also possible to add those materials that will increase the value of the final slag or metallic product or both.

It must be stated that regarding either furnace, the shape, number and positioning of tapping points for alloy and/or slag, number of charging points, instrumentation, applied cooling and or refractory, number and type of electrodes, composition and temperature of feed, slag, alloy, or off-gas does not affect the method as claimed.

The collected fumes, dusts and off gases may be used depending on composition and temperature. It is known that for example zinc can be enriched in such dusts, and even become a valuable resource again. This goes also for other elements. Operation of either furnace could be adjusted by more or less arcing, possibly no arcing at all, to reach certain goals. Again, such process optimization is only one of the many possibilities once the fundamental method of two continuous electric furnaces has been adopted.

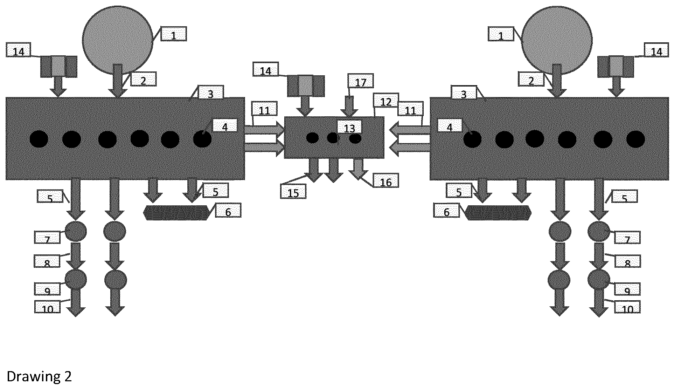

Another variation is that multiple primary continuous electric furnaces share a lesser number of secondary continuous electric furnaces. In the example in drawing 2, two primary CEFS feed their slag into a single secondary CEF, but other configurations are possible, including those where there are more secondary CEFs than primary CEFs.

The positioning of any furnace is in such case not relevant and would be optimised to what is ideal or possible for any specific situation. Furnaces could be positioned in a single line, parallel to each other, on both sides of a central aisle, with a or multiple secondary CEFs positioned near the primary CEFs or even further away as long as liquid transport is possible.

Another variation of the same idea is that one or more primary continuous electric furnaces are connected to one or more secondary continuous electric furnaces, thus allowing production of different metallic products from the primary furnaces, while allowing variable quantities of primary furnace slag to be processed in different secondary furnaces to produce a wide range of different final slag and alloys.

Multiple secondary continuous electric furnaces would also allow the processing of more problematic material streams in one or more dedicated secondary CEFs. For example, problematic or contaminated CaO and/or SiO₂ containing material streams, like but not limited to polluted sand or toxic metal containing slags, sludges, or flue dusts, could be processed together with a part of the slag from a primary CEF to extract metals and produce a usable, non-contaminated slag that can be used in the cement industry or construction.

## Claims

1. It is claimed to have developed a new method in which a dedicated 2-stage process is used to specifically produce steel or hot metal while minimizing CO₂ emissions, waste and cost, while maximising resource efficiency.

2. Another claim is that this 2-stage method allows the exclusion of a converter in case the alloy tapped from the primary CEF is sufficiently low in carbon to require treatment in a converter, without losing too much iron to final discard slag.

3. Another claim is that this 2-stage method allows for the possibility to use the high FeO slag from a primary CEF for purposes where low FeO contents, for example < 5%, are required like in cement additives, insulating wools, or glass.

4. Another claim is that the method allows use of low-quality ore or DRI, for example with a high gangue content, in the primary CEF without compromising the tapped alloy quality and the mentioned concerns for use of the final slag as previously described.

5. Another claim is that this method is primarily focused on the extraction of iron in the secondary CEF, and that other elements that are extracted are coincidental or desired only as a coproduct, unlike other operations.

6. Another claim is that because the liquid slag from the primary CEF is rich in iron and still contains a lot of heat, this energy and the secondary CEF can be used more efficiently to support processing and extraction of waste streams, that by themselves can not be processed economically or upgraded into something useful.

7. Another claim is that by processing said waste streams, also the targeted extraction of other elements than iron can become a target.

8. Another claim is that for reduction in either primary or secondary CEF of any element such as but not limited to Fe, Cr, Ni, Mn, not only carbon can be used but also elemental reductants based on for example Al, Si, Ti, Mg, and Ca or even H2 to both ensure a carbon and CO₂ free operation as well as the possibility to modify the slag to a specific composition.

9. Another claim is that the method is especially applicable when a 2-stage process will be required for lower quality DRI with such amounts of gangue that prevent use of such DRI in an EAF,

10. Another claim is that the method is especially but not only applicable when a 2-stage process will be required for hydrogen based and therefore carbon free DRI where the downstream process will be without converter technology because there is no or little carbon at all in the tapped metal, or

11. Another claim is that the method is especially applicable when a 2-stage process will be required for any DRI with such a low C content because of the prereduction with gas of any given CO-H₂ ratio, that would require the addition of carbon to make a converter operation possible.

12. Another claim is that this patent is based on the method in which the installation of in series used electric furnaces brings multiple advantages for the steel industry in which:
1. the primary continuous electric furnace:
a. produces in a single in a single stage primary CEF steel with less than 2% carbon or hot metal directly from iron containing solid input materials with preferably over 50% Fe, preferably DRI but also calcine, or other pre-reduced material, or even untreated ore, still hot or cold, having been preheated, and cooled down or not.
can be completely controlled electrically and metallurgically to regulate the alloy quality without having to be concerned for the quality, quantity, or composition of the slag regarding further use of the slag. The slag in the primary CEF can therefore be optimized to create the best conditions required for the desired tapped alloy, for example the most economical operation.
b. can be charged with any material that does not have detrimental effects on the alloy to be tapped, nor on the equipment. This includes internal and external recycling streams of materials that would otherwise be dumped, landfilled, or used for simple use such as aggregate without extracting potential value.
c. can allow the elimination of a converter stage, including the production of carbon containing gas, and associated energy losses.
d. allows the direct processing of the tapped alloy from the primary CEF by for example but not limited to ladle furnaces, argon oxygen decarburization, or vacuum oxygen decarburization into a castable and sellable product.
e. allows to treat the tapped alloy already during tapping, as is common in other metal producing operations like ferronickel. This treatment could be one in the launder, in the transport vessel, or in a buffer between taphole and transport vessel.
2. while the secondary continuous electric furnace
a. will, if required, collect and process the slag from the primary CEF or CEFs to usable or harmless products. The products could include but are not limited to:
i. an alloy of any composition by further reduction of the slag from the primary CEF, depending on the slag charged. The produced alloy is typically an Fe-based alloy with varying amounts of elements like but not limited to C, Si, Cr, Ni, Mn, Mo, V, and W, and
ii. a slag that can be used directly elsewhere, typically but not limited to Portland cement or geopolymers,
iii. a dust fraction that collects fumed elements by which the fume can become a raw material resource, possibly while the slag gets a higher quality thanks to the fuming.
b. allows the charging of internal and external primary or secondary materials, and modifies the slag, possibly including reduction of oxides, so the slag becomes applicable for other uses such as but not limited to insulation wool. Typical materials could include slags from other furnaces, polluted soil, (flue)dusts, residues from other industries like jarosite or red mud, but also volcanic rock or other natural materials.
c. can be used to collect and recycle critical raw materials or potentially harmful elements by adding such materials that otherwise would have been landfilled or used in the state they were or are rendered minimally harmful by vitrification.
3. and only the combination of at least two electric furnaces in series allows for a highly efficient and flexible use, as well as an increased recycling rate of raw materials by:
a. A significant decoupling of steel and slag quality in the primary furnace, especially by
i. The elimination of the need for any slag foaming
ii. The elimination to extract all Fe from the feed in a single stage and to reach a C content over 2% for the potentially obsolete converter stage
iii. The requirement to add CaO for protection of the refractory against attack by FeO,
The elimination of the need to produce a slag usable for, for example, cement in a single step
b. The use of the heat of liquid slag by charging it into a second CEF, which
i. Saves costs to process the slag,
ii. Allows for more economical recycling of solid primary materials and waste streams
